# EUROPEAN PATENT APPLICATION

(11) **EP 3 009 697 A1**
(43) Date of publication of application: **20.04.2016**
(21) Application number: 14306620.7
(22) Date of filing: 14.10.2014
(51) Int. Cl.: F16C 19/38, F16C 27/04, F16C 25/08

(54) **Rolling bearing assembly and rotary machine comprising such a rolling bearing assembly**

(71) Applicant: Aktiebolaget SKF, 415 50 Göteborg (SE)
(72) Inventor: Capoldi, Bruno, 89580 Charentenay (FR)
(74) Representative: Myon, Gérard Jean-Pierre

(57) **Abstract**

This rolling bearing assembly (A) comprises a rotatable element (R) adapted to rotate with respect to a non-rotatable element (B) around a central rotation axis (X-X'), and rolling systems (20, 22, 40) arranged between the rotatable element (R) and the non-rotatable element (B), said rolling systems comprising at least one rolling system having rolling elements (20) arranged along radial axes (X2) with respect to the rotation axis (X-X') of the rolling bearing assembly (A). The rolling bearing assembly comprises at least one elastic ring (14) forming a raceway track mounted on the non-rotatable element (B) so that the rolling elements (20) cooperate with the elastic ring (14). The rolling bearing assembly comprises cooperating retaining means (140, 18; 146, 30) formed on the elastic ring (14) and the non-rotatable element (B) adapted to block the elastic ring (14) in radial translation with respect to the non-rotatable element (B).

## Description

The invention concerns a rolling bearing assembly and a rotary machine, in particular a tunnel boring machine, comprising such a rolling bearing assembly.

Rolling bearing assemblies for tunnel boring machines, oil extraction installations or marine applications usually include roller bearings which cooperate with an elastic ring forming a raceway track urged against the rollers by spring systems, to cancel an axial clearance which exists in the rolling bearing assembly. Such a system is known from US-A-2010/0316322.

During operation of the rolling bearing assembly, deformations of the elastic ring can occur, during which the elastic ring becomes oval in such a way that it may contact a radial surface of the rotatable element of the assembly, causing wear and friction torque against the rotation of the rotatable element.

The aim of the invention is to provide a new rolling bearing assembly in which the elastic ring is prevented from deforming too much.

To this end, the invention concerns a rolling bearing assembly comprising a rotatable element adapted to rotate with respect to a non-rotatable element around a central rotation axis, and rolling systems arranged between the rotatable element and the non-rotatable element, said rolling systems comprising at least one rolling system having rolling elements arranged along radial axes with respect to the rotation axis of the rolling bearing assembly, the rolling bearing assembly comprising at least one elastic ring forming a raceway track mounted on the non-rotatable element so that the rolling elements cooperate with the elastic ring. This rolling bearing assembly is characterized in that it comprises cooperating retaining means formed on the elastic ring and the non-rotatable element adapted to block the elastic ring in radial translation with respect to the non-rotatable element.

Thanks to the invention, the elastic ring is retained radially and is prevented from contacting the rotatable element in case of deformation.

According to further aspects of the invention which are advantageous but not compulsory, such a rolling bearing assembly may incorporate one or several of the following features:
- The retaining means are partially or totally complementary-shaped.
- The retaining means comprise at least one retaining member protruding axially from an axial surface of the elastic ring or from an axial surface of the non-rotatable element, and inserted into at least one corresponding recess axially facing the retaining member and provided on the axial surface of the elastic ring or on the axial surface of the non-rotatable element.

- The retaining means comprises a single retaining member extending along the whole circumference of the elastic ring or the non-rotatable element.
- The retaining means comprises several retaining members formed on limited angular sectors of the circumference of the elastic ring or the non-rotatable element.
- The at least one retaining member is formed on the elastic ring.
- The retaining member is formed in the vicinity of an outer edge of the elastic ring.
- The at least one retaining member is formed on the non-rotatable element.
- The retaining member is formed in the vicinity of an inner edge of the non-rotatable element
- The at least one retaining member is provided in a central radial region of the elastic ring or the rotatable element.

The invention also concerns a rotary machine, in particular a tunnel boring machine, comprising a rolling bearing as mentioned here-above.

The invention will now be explained in correspondence with the annexed figures, as an illustrative example. In the annexed figures:
- figure 1 is a partial sectional view of a rolling bearing assembly according to the invention;
- figure 2 is a view at a larger scale of detail II on figure 1;
- figures 3 to 5 is a partial sectional view similar to figure 2, of rolling bearing assemblies respectively according to a second, a third and a fourth embodiments of the invention.

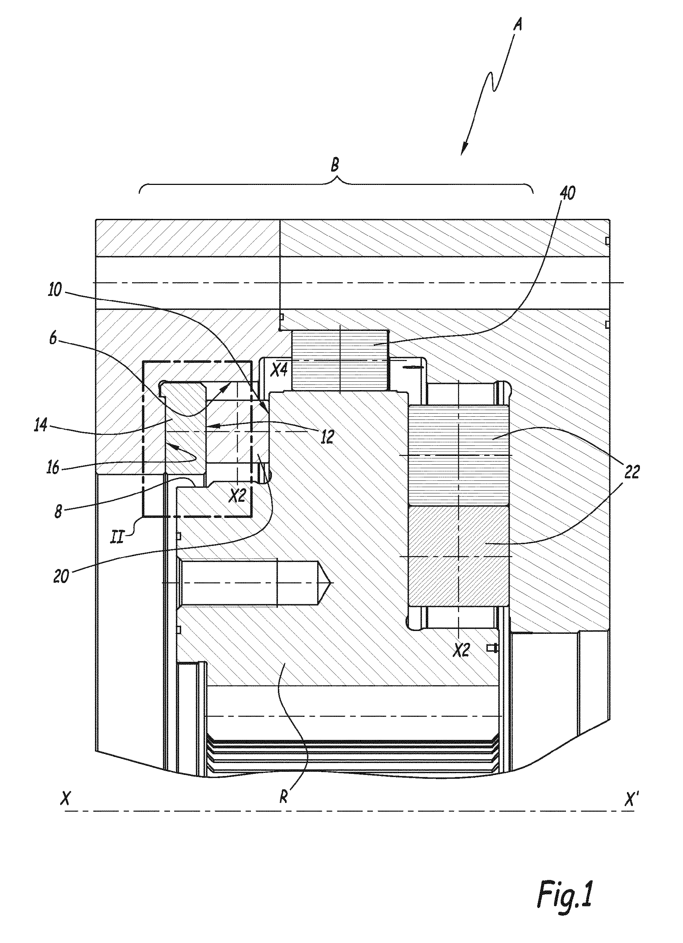

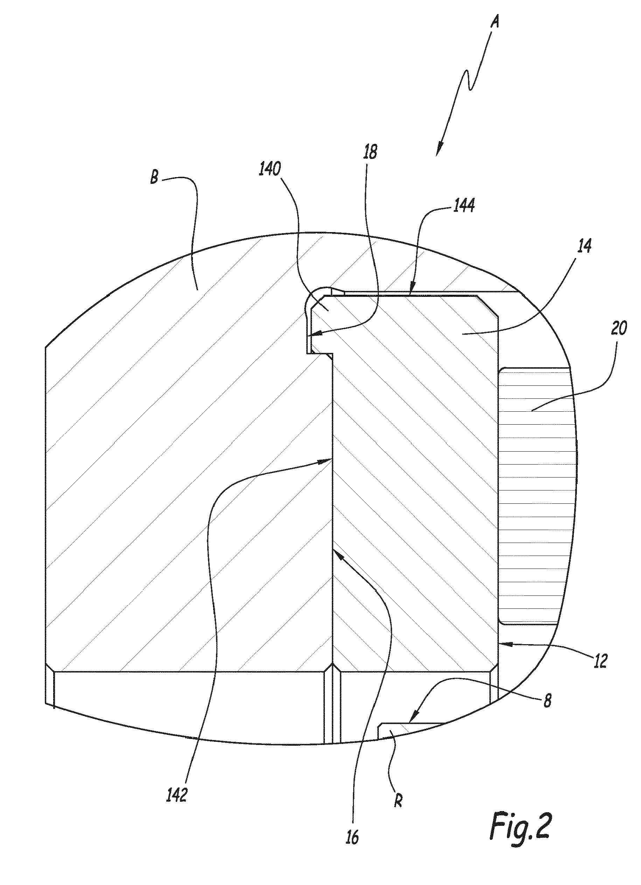

A rolling bearing assembly A is represented on figures 1 and 2. Rolling bearing assembly A comprises a rotatable element R and a non-rotatable element or base B. Rotatable element R rotates with respect to non-rotatable element B around a central axis X-X' represented on figure 1.

Such a rolling bearing assembly is intended for use in a rotary machine such as a tunnel boring machine.

Rolling bearing assembly A also comprises rolling bearings which permit the rotation of rotatable element R with respect to non-rotatable element B. These rolling bearings comprise two radial roller bearings, respectively a first bearing and a second bearing, comprising respective rollers 20 and 22 which have rotation axes X2 perpendicular to axis X-X', and one axial roller bearing comprising rollers 40 which have a rotation axis X4 parallel to axis X-X'.

According to a non-shown embodiment of the invention, rolling bearing assembly A may comprise other types of bearing systems, such as ball bearings or needle bearings.

The first radial roller bearing is radially mounted between a radial cylindrical surface 6 of non-rotatable element B and a radial cylindrical surface 8 of rotatable element R. Rollers 20 cooperate, on a first side, with an axial annular surface 10 of rotatable element R, and on an opposite side, with an axial surface 12 of non-rotatable element B, which is provided on an elastic ring 14 which forms an annular raceway track. Elastic ring 14 is pushed against rollers 20 by several non-shown resilient elements.

Elastic ring 14 is mounted against an axial annular surface 16 of non-rotatable element B.

To prevent elastic ring 14 from deforming towards an oval shape in which it could contact radial surface 8, rolling bearing assembly A comprises cooperating retaining means formed on elastic ring 14 and non-rotatable element B so as to block elastic ring 14 in radial translation, in a direction radial with respect to axis X-X', with respect to non-rotatable element B.

In the embodiment of figures 1 and 2, the retaining means are partially complementary-shaped and comprise at least one retaining member 140 provided on elastic ring 14 and which protrudes axially from an axial surface 142 of elastic ring 14, which is in contact with axial surface 16. In this example, retaining element 140 is formed in the vicinity of an outer edge 144 of elastic ring 14. Retaining member 140 is inserted into a partially complementary-shaped recess 18 of axial surface 16 so as to block elastic ring 14 in radial translation with respect to non-rotatable element B. Thus, deformation of elastic ring 14 towards radial surface 8 is prevented, and liability and service life of rolling bearing assembly A is improved.

Retaining member 140 may be unique and extend along the whole circumference of elastic ring 14.

Alternatively, elastic ring 14 may comprise several retaining members 140 formed on limited angular sectors of the circumference of elastic ring 14.

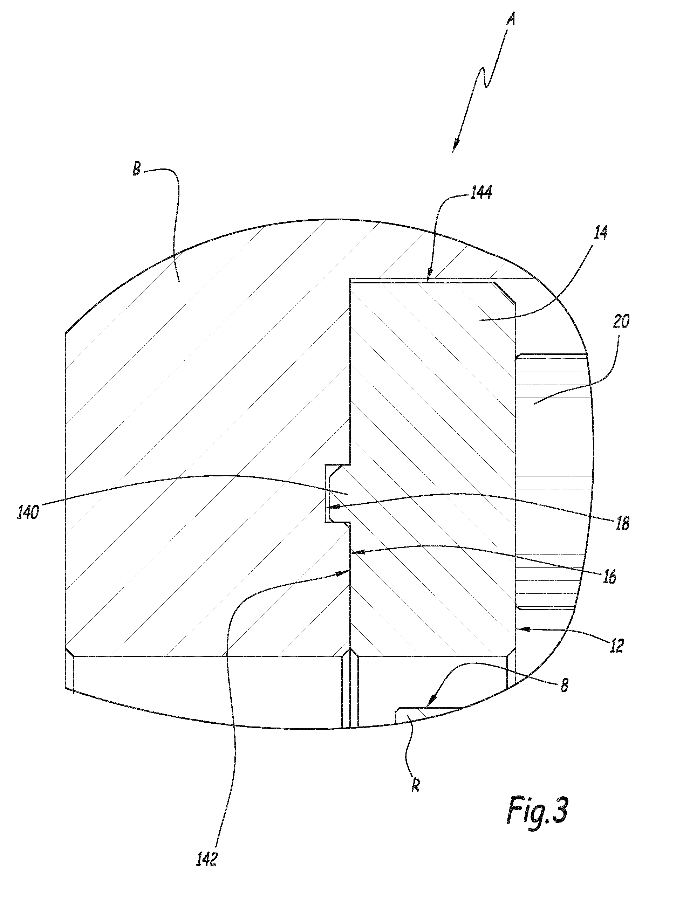

A second, a third and a fourth embodiment of the invention are respectively represented on figures 3 to 5. In these embodiments, elements similar to the ones of the first embodiment have the same reference and work in the same way. Only the differences from the first embodiment are detailed here-after.

In the embodiment of figure 3, retaining element 140 and recess 18 are formed in central radial regions of elastic ring 14 and axial surface 16. This central radial region is defined by a radial length equal to 10 to 15% of the total radial length of axial surfaces 142 and 16 on both sides of the radial center of these surfaces.

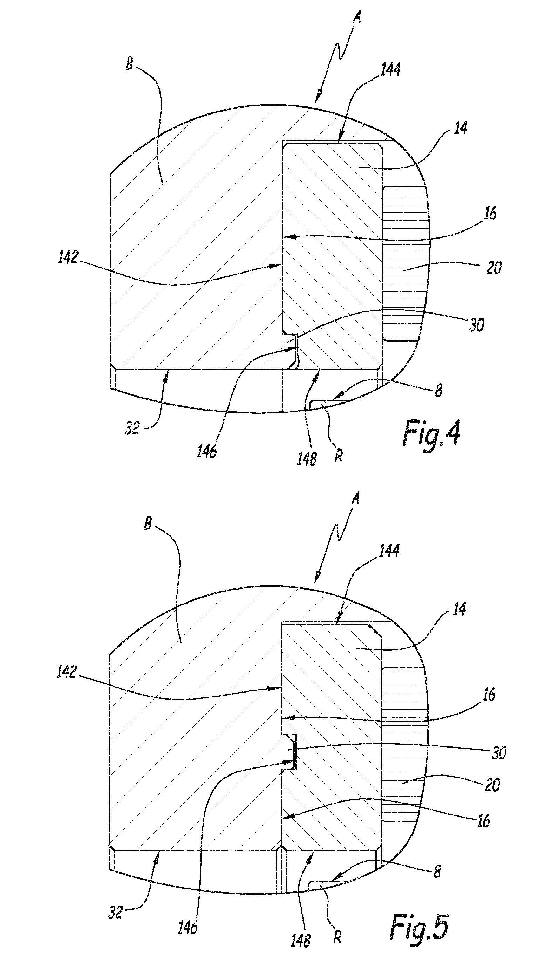

In the embodiment of figure 4, elastic ring 14 does not comprise any retaining member, but comprises a recess 146 provided on axial surface 142, in which a complementary-shaped retaining member 30 is received. This retaining member 30 is provided on non-rotatable element B and protrudes from axial surface 16. Recess 18 and retaining member 30 are located in the vicinity of an inner edge 32 of non-rotatable element B, extending parallel to an inner edge 148 of elastic ring 14, oriented towards radial surface 8.

The embodiment figure 5 is different from the embodiment of figure 4 in that recess 146 and retaining member 30 are formed in central radial regions of elastic ring 14 and axial surface 16. The design of this embodiment can be considered as an inversion of the design of the embodiment of figure 3.

According to a non-shown embodiment of the invention, the complementary-shaped retaining means may comprise more than one retaining member and one recess.

In a non-shown embodiment, the retaining means may be totally complementary-shaped, or may alternatively be cooperating means such as clipping, gluing, soldering or brazing.

The technical features of the embodiments and variants discloses here-above can be combined to form new embodiments of the invention.

## Claims

1. Rolling bearing assembly (A) comprising a rotatable element (R) adapted to rotate with respect to a non-rotatable element (B) around a central rotation axis (X-X'), and rolling systems (20, 22, 40) arranged between the rotatable element (R) and the non-rotatable element (B), said rolling systems comprising at least one rolling system having rolling elements (20) arranged along radial axes (X2) with respect to the rotation axis (X-X') of the rolling bearing assembly (A), the rolling bearing assembly comprising at least one elastic ring (14) forming a raceway track mounted on the non-rotatable element (B) so that the rolling elements (20) cooperate with the elastic ring (14), wherein the rolling bearing assembly comprises cooperating retaining means (140, 18; 146, 30) formed on the elastic ring (14) and the non-rotatable element (B) adapted to block the elastic ring (14) in radial translation with respect to the non-rotatable element (B).

2. Rolling bearing assembly according to claim 1, wherein the retaining means (140, 18; 146, 30) are partially or totally complementary-shaped.

3. Rolling bearing assembly according to claim 2, wherein the retaining means comprise at least one retaining member (140; 30) protruding axially from an axial surface (142; 16) of the elastic ring (14) or from an axial surface (16) of the non-rotatable element (B), and inserted into at least one corresponding recess (18; 146) axially facing the retaining member (140; 30) and provided on the axial surface (142; 16) of the elastic ring (14) or on the axial surface (16) of the non-rotatable element (B).

4. Rolling bearing assembly according to claim 3, wherein the retaining means comprises a single retaining member (140; 30) extending along the whole circumference of the elastic ring (14) or the non-rotatable element (B).

5. Rolling bearing assembly according to claim 3, wherein the retaining means comprises several retaining members (140; 30) formed on limited angular sectors of the circumference of the elastic ring (14) or the non-rotatable element (B).

6. Rolling bearing assembly according to any of claims 3 to 5, wherein the at least one retaining member (140) is formed on the elastic ring (14).

7. Rolling bearing assembly according to claim 6, wherein the retaining member (140) is formed in the vicinity of an outer edge (144) of the elastic ring (14).

8. Rolling bearing assembly according to any of claims 3 to 5, wherein the at least one retaining member (30) is formed on the non-rotatable element (B).

9. Rolling bearing assembly according to claim 8, wherein the retaining member (30) is formed in the vicinity of an inner edge (32) of the non-rotatable element (B)

10. Rolling bearing assembly according to any of claims 3 to 5, wherein the at least one retaining member (140; 30) is provided in a central radial region of the elastic ring (14) or the rotatable element (B).

11. Rotary machine, in particular a tunnel boring machine, comprising a rolling bearing assembly (A) according to one of the previous claims.
